# FASCICULE DE BREVET EUROPEEN

(11) **EP 3 752 722 B1**
(45) Date de publication et mention de la délivrance du brevet: **02.03.2022**
(21) Numéro de dépôt: 19703152.9
(22) Date de dépôt: 07.01.2019
(51) Int. Cl.: F01N 13/18, F01N 1/00, B60K 1/00, B60K 13/04

(54) **VÉHICULE AUTOMOBILE Á CROCHET D'ÉCHAPPEMENT RELIÉ AU SILENCIEUX PAR DES MOYENS DE RUPTURE PRÉDÉTERMINÉE**
KRAFTFAHRZEUG MIT EINEM MIT DEM SCHALLDÄMPFER DURCH EINE SOLLBRUCHSTELLE VERBUNDENEN AUSPUFFHAKEN
MOTOR VEHICLE WITH EXHAUST HOOK CONNECTED TO THE SILENCER BY PREDETERMINED-BREAKAGE MEANS

(30) Priorité: 14.02.2018 FR 1851229
(43) Date de publication de la demande: 23.12.2020
(73) Titulaire: PSA Automobiles SA, 78300 Poissy (FR)
(72) Inventeur: BOURDIN, Loic, 78400 CHATOU (FR); CHAPEL, Julien, 77380 COMBS LA VILLE (FR); HARRER, Bertrand, 90000 BELFORT (FR)
(86) Numéro de dépôt international: PCT/FR2019/050024
(87) Numéro de publication internationale: WO 2019/158832

(56) Documents cités:
- WO-A1-2011/123105
- DE-A1-102014 209 604
- FR-A1- 3 053 638
- JP-A- H04 140 414

## Description

La présente invention se rapporte à un véhicule automobile. L'invention concerne plus particulièrement un véhicule automobile comportant un crochet d'échappement relié au silencieux par des moyens rupture prédéterminé.

Les véhicules hybrides et électriques embarquent des équipements sensibles et onéreux que les constructeurs cherchent à protéger des impacts, c'est le cas notamment des modules de batterie de traction. Dans certains véhicules, le module de batterie est installé à l'arrière du véhicule à proximité du pare-chocs en étant intercalé entre le train arrière du véhicule, considéré comme étant un élément non déformable, et le pare-chocs arrière, considéré comme étant un élément déformable en cas d'impact arrière. En cas de collision, il arrive que le pare-chocs arrière se déplace ou se déforme. Cette situation est susceptible de provoquer un endommagement du module de batterie.

Par ailleurs, les échappements sont classiquement fixés au véhicule via un crochet soudé sur le silencieux et une suspente qui lie ce crochet et donc le silencieux au châssis, cette suspente comprenant un matériau caoutchouc pour absorber les débattements entre l'échappement et le véhicule (débattement du moteur, facilité de dépose/repose, dilatation thermique différentielle, découplage vibratoire, ...). Ces suspentes peuvent être enlacées par une lanière permettant de maintenir la structure quand la suspente est totalement caoutchouc ou peuvent être avec une âme solide pour garantir la rigidité de l'ensemble et assurer les reprises d'efforts lors des trépidations de la route ou des petits chocs.

On connait encore de l'état de la technique des solutions visant à absorber l'énergie d'impact en cas de collision du véhicule. Par exemple, le document US9409601B2 enseigne l'utilisation d'un moyen de détection d'un impact déclenchant des charges explosives de vis de fixation du train de roues afin de libérer partiellement le train de roues du châssis. Une fois la liaison rompue, cette solution permet un déplacement du train de roues vers l'arrière du véhicule sous l'action de la force de l'impact. Le déplacement du train de roues permet de libérer de l'espace dans le compartiment moteur pour une meilleure absorption du choc et une meilleure protection des passagers. Cependant, cette solution ne permet pas de préserver certains équipements sensibles lors de l'impact, comme le module de batterie du véhicule hybride.

DE102014209604 A1 et JPH04140414 A décrivent des silencieux fixés au châssis par l'intermédiaire de suspentes et de crochets fixés au silencieux. En cas de collision du véhicule, les crochets sortent de la suspente pour permettre au silencieux de pivoter et d'éviter d'endommager un équipement sensible du véhicule.

Par conséquent, le problème à la base de l'invention est d'éviter que lors d'un choc, le silencieux vienne générer un effort important sur le module de batterie qui viendrait à se dégrader alors que c'est un constituant très sensible sur un véhicule hydride.

Pour résoudre ce problème, il est prévu selon l'invention un véhicule automobile comportant :
- un châssis auquel est fixé une suspente d'échappement,
- un silencieux arrière d'échappement,
- un crochet dont une extrémité est reliée à la suspente,
caractérisé en ce que l'autre extrémité du crochet est entré dans un étui fixé au silencieux le crochet étant retenu à l'étui par des moyens d'immobilisation, et en ce que l'extrémité du crochet dans l'étui, l'étui et les moyens d'immobilisation sont agencés de sorte que lors d'un déplacement longitudinal du silencieux par rapport à la suspente, un tel déplacement longitudinal se produisant lors d'un choc sur l'arrière du véhicule, les moyens d'immobilisation cèdent et l'extrémité du crochet se dégage de l'étui.

L'effet technique est de dévier le silencieux d'une trajectoire de choc longitudinale en permettant au silencieux de tomber par gravité une fois que les moyens d'immobilisation ont cédé et que le crochet a pu se dégager de l'étui dans lequel son extrémité était engagée.

Diverses caractéristiques supplémentaires peuvent être prévues, seules ou en combinaisons :
Dans une réalisation, l'étui dans lequel est inséré l'extrémité du crochet est une portion de tube fixée au silencieux.

Dans une autre réalisation, l'étui dans lequel est inséré l'extrémité du crochet est une portion de tôle recouvrant l'extrémité du crochet et fixée au silencieux.

Dans une réalisation, les moyens d'immobilisation comprennent un dispositif d'encliquetage.

Dans une autre réalisation, les moyens d'immobilisation comprennent une pièce annulaire fendue logée dans une gorge aménagée dans le crochet, la pièce annulaire fendue formant anneau d'arrêt de l'étui.

Dans une autre réalisation, les moyens d'immobilisation comprennent une tige logée dans un perçage de l'étui et dans un perçage du crochet.

Dans une réalisation, la tige est une goupille insérée à force dans les perçages du crochet et de l'étui.

Dans une autre réalisation, la tige appartient à une goupille attache rapide.

Dans une réalisation, le véhicule automobile I comporte un équipement sensible disposé en avant du silencieux.

Dans une réalisation, l'équipement sensible est un module de batterie ou un réservoir de fluide ou un réservoir de carburant.

D'autres particularités et avantages apparaîtront à la lecture de la description ci-après d'un mode particulier de réalisation, non limitatif de l'invention, faite en référence aux figures dans lesquelles :
- La figure 1 est une représentation schématique d'un véhicule automobile conforme à l'invention.
- Les figures 2a et 2b sont des représentations schématiques, respectivement en coupe et en perspective, d'un premier mode de réalisation de l'invention.
- Les figures 3a et 3b sont des représentations schématiques, respectivement en coupe et en perspective, d'un second mode de réalisation de l'invention.
- La figure 4 est une représentation schématique en coupe d'un troisième mode de réalisation de l'invention.

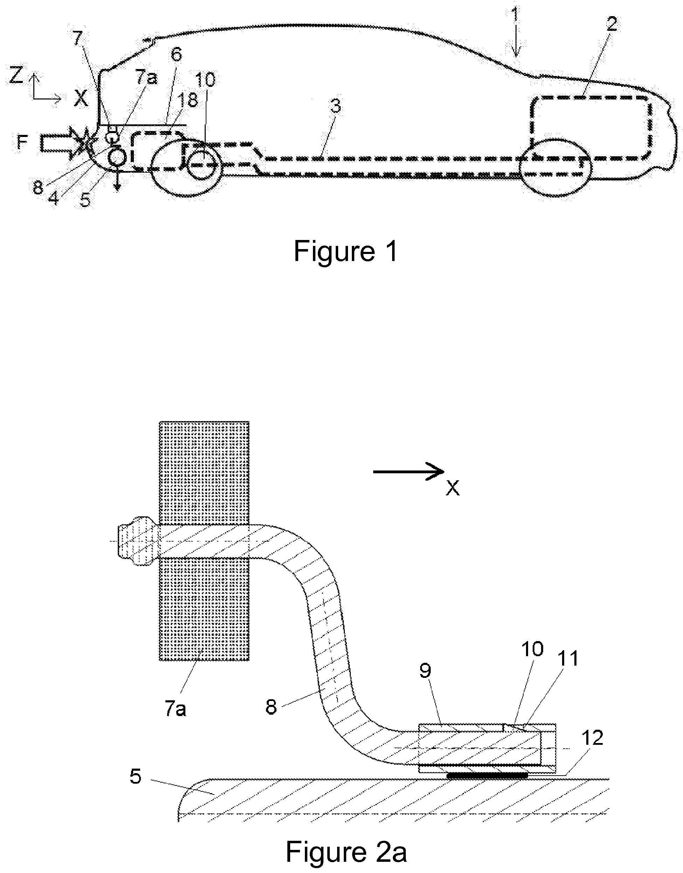

La figure 1 représente un véhicule automobile 1 comportant un moteur thermique 2 disposé en partie avant du véhicule 1 dans le compartiment moteur. Les gaz de combustion du moteur thermique 2 sont évacués par une ligne d'échappement 3 des gaz de combustion qui s'étend de la sortie des cylindres de combustion du moteur thermique 2 jusqu'à un orifice disposé en arrière du véhicule 1 au niveau d'un pare-chocs arrière 4.

La ligne d'échappement 3 comporte plusieurs organes de traitement des gaz qui ne feront pas l'objet d'une description détaillée. Dans cette configuration du véhicule 1, la ligne d'échappement 3 comporte notamment un silencieux arrière 5, de forme sensiblement cylindrique, qui s'étend dans la direction transversale du véhicule 1, parallèlement au pare pare-chocs arrière 4.

Le silencieux 5 est fixé au châssis 6 par l'intermédiaire d'une suspente d'échappement 7. La suspente 7 comprend une partie élastomère 7a, cette partie élastomère étant elle-même liée mécaniquement à la suspente 7 fixée au châssis 6 du véhicule 1. La suspente 7 est notamment disposée sous le compartiment du coffre du véhicule 1. Un crochet 8 est accroché d'un coté à la partie élastomère 7a de la suspente 7 et de l'autre côté au silencieux 5, par l'intermédiaire d'un dispositif à rupture prédéterminé qui sera détaillé plus loin.

Par ailleurs, le véhicule 1 comporte également un équipement sensible 18, par exemple, dans le cas d'un véhicule hybride, un module de batterie, pour fournir de l'énergie à une machine électrique de traction et le cas échéant stocker une énergie électrique générée par cette machine lorsque cette dernière fonctionne en mode générateur. Le module de batterie 18 est disposé dans cette configuration sous le compartiment du coffre du véhicule 1, à proximité et en vis-à-vis du silencieux 5. On notera que les équipements montés dans la partie arrière du véhicule 1 sont disposés dans l'ordre suivant après le pare-chocs arrière 4 selon la direction longitudinale du véhicule 1, dans le sens allant de l'arrière vers l'avant : le silencieux 5 puis, directement en vis-à-vis, le module de batterie 18, puis un train de roue arrière 10 du véhicule 1, ce dernier étant considéré comme non déformable et non déplaçable de sa position de montage initiale sur le châssis 6 du véhicule 1. La direction longitudinale est représentée par l'axe X, avant et arrière étant définis relativement à cet axe longitudinal X, selon le sens habituel pour définir l'avant et l'arrière d'un véhicule.

Lors d'un impact intervenant à l'arrière du véhicule 1, un effort F s'applique tendant à écraser l'arrière du véhicule. Ainsi, le silencieux arrière 5 est susceptible de suivre une trajectoire de choc l'entraînant vers l'avant et pouvant endommager le module de batterie 18, de par sa déformation ou son déplacement résultant du choc, et du fait de la prise en étau du module de batterie entre le silencieux 5 et le train de roue arrière 10 non déformable.

L'invention vise à protéger le module de batterie 18 d'un impact ayant une force de choc F intervenant à l'arrière du véhicule 1 selon une direction longitudinale X du véhicule 1.

A cet effet, il est prévu d'avoir un crochet 8 dont une extrémité est reliée à la suspente 7 et l'autre extrémité est insérée dans un étui fixé au silencieux 5. Le crochet 8 est retenu à l'étui par des moyens d'immobilisation. Lors d'un choc F sur l'arrière du véhicule, le silencieux 5 se déplace longitudinalement, ce qui l'écarte de la suspente 7. En effet, puisque la suspente 7 est reliée au châssis 6, celui-ci étant plus rigide, il se déforme moins au choc que l'échappement. L'étui et l'extrémité du crochet sont disposés de sorte que ce déplacement longitudinal tend à faire sortir l'extrémité du crochet de l'étui. Les moyens d'immobilisation sont prévus pour céder lorsque qu'un seuil d'effort prédéterminé est atteint. Une fois que les moyens d'immobilisation ont cédé, l'extrémité du crochet 8 se dégage de l'étui.

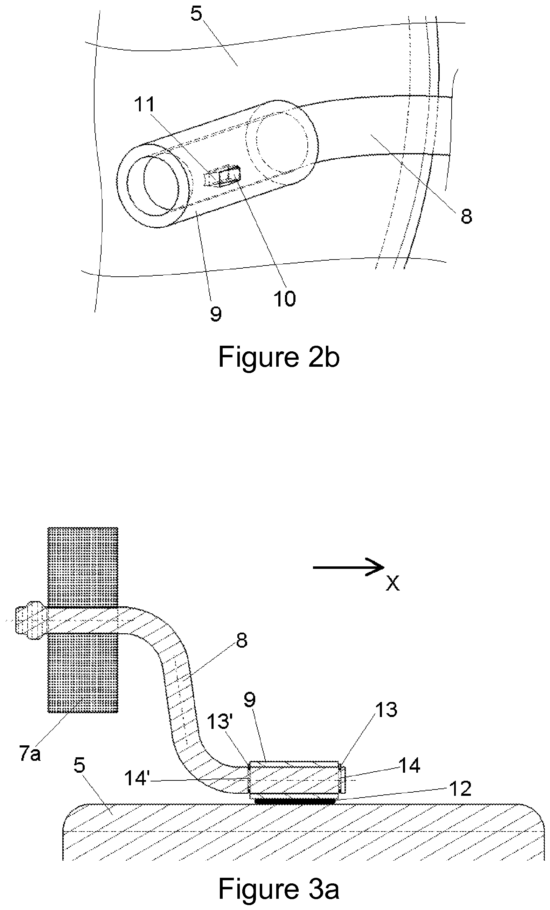

Les figures 2a et 2b illustrent un premier exemple de réalisation de dispositif à rupture qui peut être envisagée sur le crochet 8 d'échappement. Dans ce mode de réalisation, le crochet 8 à une extrémité reliée à la partie élastomère 7a de la suspente 7 d'échappement et l'autre extrémité est inséré dans une portion de tube 9 faisant office d'étui. Cette portion de tube 9 est fixée au silencieux 5, par exemple au moyen d'une soudure 12.

Le crochet 8 comprend un dispositif d'encliquetage, ici un ergot 10 comportant une rampe et formant en coupe longitudinal un triangle, cet ergot 10 étant engagé dans une encoche 11 aménagée dans la portion de tube 9. Avant le choc, l'ergot 10 coopère avec l'encoche 11 pour immobiliser le tube 9 par rapport au crochet 8.

Lors du choc F à l'arrière du véhicule, le silencieux 5 va être poussé vers l'avant du véhicule, selon la direction X, ce qui va provoquer un effort important de traction entre l'encoche et l'ergot 10. L'ergot et l'encoche sont dimensionnés pour qu'au-delà d'un seuil d'effort prédéterminé l'ergot cède.

Une fois que l'ergot 10 a cédé, l'ensemble suspente 7 avec le crochet 8 reste accroché au châssis du véhicule alors que la partie échappement comprenant le silencieux 5 et le tube 9 se détache ce qui évite une retenue vers le haut de l'échappement et le libère afin qu'il puisse tomber par son propre poids et passer sous le bac batterie.

Un autre dispositif d'encliquetage peut-être prévu, tel qu'un dispositif à ressort et bille.

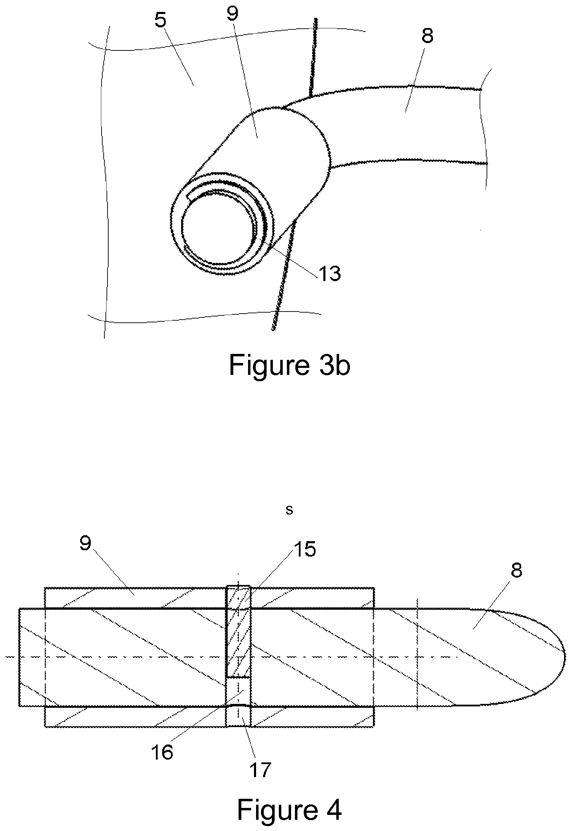

Les figures 3a et 3b illustrent un second exemple de réalisation. Comme pour le premier mode de réalisation, le crochet 8 à une extrémité reliée à la partie élastomère 7a de la suspente 7 d'échappement et autre extrémité est inséré dans une portion de tube 9 faisant office d'étui. Cette portion de tube 9 est fixée au silencieux 5, par exemple au moyen d'une soudure 12. Dans ce second mode de réalisation, le crochet 8 comprend une gorge annulaire 14 dans laquelle est logé une pièce annulaire fendue 13, communément appelée par son terme anglais « circlips ». L'extrémité du tube 9 vient en butée contre cette pièce 13 qui forme donc un anneau d'arrêt. Afin d'améliorer l'immobilisation du tube 9, on peut prévoir une deuxième gorge annulaire 14' dans laquelle est logé une deuxième pièce annulaire fendue 13'. Avant le choc, la pièce annulaire fendue 13, coopère avec la gorge 14 pour immobiliser le tube 9 par rapport au crochet 8.

Lors du choc F à l'arrière du véhicule, le silencieux 5 va être poussé vers l'avant du véhicule, selon la direction X, ce qui va provoquer un effort important qui tend à pousser la pièce annulaire fendue 13 hors de sa gorge 14. La pièce annulaire fendue 13 et sa gorge 14 sont dimensionnés pour qu'au-delà d'un seuil d'effort prédéterminé la pièce annulaire fendue sorte de sa gorge 14.

Comme pour le premier mode de réalisation, une fois que la pièce annulaire fendue 13, est sortie de sa gorge, l'ensemble suspente 7 avec le crochet 8 reste accroché au châssis du véhicule alors que la partie échappement comprenant le silencieux 5 et le tube 9 se libère et tombe par son propre poids.

La figure 4 illustre un troisième exemple de réalisation. Dans ce troisième mode de réalisation, le crochet 8 comprend un perçage 16 dans le diamètre du crochet 8, la portion de tube comprend également un perçage 17 et la portion de tube est retenu au crochet 8 au moyen d'une goupille 15 installée en force dans les deux perçages 16, 17. Avant le choc, la goupille 15 forme une tige qui coopère avec les perçages 16, 17 pour immobiliser le tube 9 par rapport au crochet 8.

Lors du choc F à l'arrière du véhicule, le silencieux 5 va être poussé vers l'avant du véhicule, selon la direction X, ce qui va provoquer un effort important qui tend écarter le crochet 8 du tube 9 et à cisailler la goupille 15. La goupille 15 est dimensionnée pour qu'au-delà d'un seuil d'effort prédéterminé elle se casse. Une fois la goupille 15 cassée, l'ensemble suspente 7 avec le crochet 8 reste accroché au châssis du véhicule alors que la partie échappement comprenant le silencieux 5 et le tube 9 se libère et tombe par son propre poids.

En variante, pour une mise en place plus aisée, la goupille 15 montée à force peut être remplacée par une goupille attache rapide comprenant une tige traversant les perçages 16, 17, pouvant être insérée dans les perçages sans montage en force.

L'invention ne se limite pas au mode de réalisation décrit.

Dans un autre mode de réalisation la portion de tube dans laquelle est insérée l'extrémité du crochet peut être remplacée par une portion de tôle recouvrant cette extrémité du crochet et fixée de part et d'autre du crochet sur le silencieux, faisant ainsi office d'étui.

Dans un autre mode de réalisation, l'équipement sensible peut par exemple être un réservoir de fluide tel que du carburant. L'équipement sensible peut ne pas être présent.

## Revendications

1. Véhicule (1) automobile comportant :
- un châssis (6) auquel est fixé une suspente (7) d'échappement,
- un silencieux (5) arrière d'échappement,
- un crochet (8) dont une extrémité est reliée à la suspente (7),
**caractérisé en ce que** l'autre extrémité du crochet (8) est entré dans un étui fixé au silencieux (5), le crochet (8) étant retenu à l'étui par des moyens d'immobilisation, et **en ce que** l'extrémité du crochet (8) dans l'étui, l'étui et les moyens d'immobilisation sont agencés de sorte que lors d'un déplacement longitudinal du silencieux par rapport à la suspente (7), un tel déplacement longitudinal se produisant lors d'un choc (F) sur l'arrière du véhicule, les moyens d'immobilisation cèdent et l'extrémité du crochet (8) se dégage de l'étui.

2. Véhicule selon la revendication 1, **caractérisé en ce que** l'étui dans lequel est inséré l'extrémité du crochet (8) est une portion de tube (9) fixée au silencieux (5).

3. Véhicule selon la revendication 1, **caractérisé en ce que** l'étui dans lequel est inséré l'extrémité du crochet (8) est une portion de tôle recouvrant l'extrémité du crochet (8) et fixée au silencieux (5).

4. Véhicule selon l'une quelconque des revendications 1 à 3, **caractérisé en ce que** les moyens d'immobilisation comprennent un dispositif d'encliquetage (10, 11).

5. Véhicule selon l'une quelconque des revendications 1 à 3, **caractérisé en ce que** les moyens d'immobilisation comprennent une pièce annulaire fendue (13) logée dans une gorge (14) aménagée dans le crochet (8), la pièce annulaire fendue formant un anneau d'arrêt de l'étui.

6. Véhicule selon l'une quelconque des revendications 1 à 3, **caractérisé en ce que** les moyens d'immobilisation comprennent une tige logée dans un perçage (17) de l'étui et dans un perçage (16) du crochet (8).

7. Véhicule selon la revendication 6, **caractérisé en ce que** la tige est une goupille (15) insérée à force dans les perçages (16, 17) du crochet (8) et de l'étui.

8. Véhicule selon la revendication 6, **caractérisé en ce que** la tige appartient à une goupille attache rapide.

9. Véhicule automobile selon l'une quelconque des revendications précédentes, **caractérisé en ce qu'**il comporte un équipement sensible (18) disposé en avant du silencieux (5).

10. Véhicule automobile selon la revendication 9, **caractérisé en ce que** l'équipement sensible (18) est un module de batterie ou un réservoir de fluide ou un réservoir de carburant.

## Patentansprüche

1. Kraftfahrzeug (1) umfassend :
- einen Rahmen (6), an dem ein Auspuffaufhänger (7) befestigt ist,
- ein Endschalldämpfer (5),
- einen Haken (8), dessen eines Ende mit dem Aufhänger (7) verbunden ist,
**dadurch gekennzeichnet, dass** das andere Ende des Hakens (8) in ein am Schalldämpfer (5) befestigtes Gehäuse eingedrungen ist, wobei der Haken (8) durch Feststellmittel im Gehäuse gehalten wird, und dass das Ende des Hakens (8) in das Gehäuse, das Gehäuse und die Feststellmittel so angeordnet sind, dass bei einer Längsverschiebung des Schalldämpfers relativ zum Aufhänger (7), die bei einem Aufprall (F) auf das Fahrzeugheck auftritt, die Feststellmittel nachgeben und das Ende des Hakens (8) wird aus dem Gehäuse gelöst.

2. Fahrzeug nach Anspruch 1, **dadurch gekennzeichnet, dass** die Hülle, in die das Ende des Hakens (8) eingesteckt wird, ein am Schalldämpfer (5) befestigter Rohrabschnitt (9) ist.

3. Fahrzeug nach Anspruch 1, **dadurch gekennzeichnet, dass** die Hülle, in die das Ende des Hakens (8) eingeführt wird, ein das Ende des Hakens (8) überdeckendes und am Schalldämpfer (5) befestigtes Blechstück ist.

4. Fahrzeug nach einem der Ansprüche 1 bis 3, **dadurch gekennzeichnet, dass** die Immobilisierungsmittel eine Verriegelungsvorrichtung (10, 11) umfassen.

5. Fahrzeug nach einem der Ansprüche 1 bis 3, **dadurch gekennzeichnet, dass** die Feststellmittel einen geteilten ringförmigen Teil (13) umfassen, der in einer in den Haken (8) eingebrachten Nut (14) aufgenommen ist, wobei der geteilte ringförmige Teil einen Anschlagring des Halfter.

6. Fahrzeug nach einem der Ansprüche 1 bis 3, **dadurch gekennzeichnet, dass** die Feststellmittel eine Stange umfassen, die in einer Bohrung (17) des Gehäuses und in einer Bohrung (16) des Hakens (8) untergebracht ist.

7. Fahrzeug nach Anspruch 6, **dadurch gekennzeichnet, dass** die Stange ein Zapfen (15) ist, der gewaltsam in die Löcher (16, 17) des Hakens (8) und des Koffers eingesteckt ist.

8. Fahrzeug nach Anspruch 6, **dadurch gekennzeichnet, dass** die Stange zu einem Schnellbefestigungsstift gehört.

9. Kraftfahrzeug nach einem der vorhergehenden Ansprüche, **dadurch gekennzeichnet, dass** es empfindliche Einrichtungen (18) umfasst, die vor dem Schalldämpfer (5) angeordnet sind.

10. Kraftfahrzeug nach Anspruch 9, **dadurch gekennzeichnet, dass** die empfindliche Einrichtung (18) ein Batteriemodul oder ein Flüssigkeitstank oder ein Kraftstofftank ist.

## Claims

1. Motor vehicle (1) comprising :
- a frame (6) to which an exhaust hanger (7) is attached,
- a rear exhaust silencer (5),
- a hook (8), one end of which is connected to the hanger (7),
**characterized in that** the other end of the hook (8) has entered a case fixed to the silencer (5), the hook (8) being retained in the case by immobilizing means, and **in that** the end of the hook (8) in the case, the case and the immobilizing means are arranged so that during a longitudinal displacement of the silencer relative to the hanger (7), such a longitudinal displacement occurring during an impact (F) on the rear of the vehicle, the immobilization means give way and the end of the hook (8) is released from the case.

2. Vehicle according to Claim 1, **characterized in that** the case in which the end of the hook (8) is inserted is a portion of tube (9) fixed to the silencer (5).

3. Vehicle according to Claim 1, **characterized in that** the case in which the end of the hook (8) is inserted is a portion of sheet metal covering the end of the hook (8) and fixed to the silencer (5).

4. Vehicle according to any one of Claims 1 to 3, **characterized in that** the immobilization means comprise a latching device (10, 11).

5. Vehicle according to any one of claims 1 to 3, **characterized in that** the immobilization means comprise a split annular part (13) housed in a groove (14) made in the hook (8), the split annular part forming a stopper ring of the holster.

6. Vehicle according to any one of claims 1 to 3, **characterized in that** the immobilization means comprise a rod housed in a bore (17) of the case and in a bore (16) of the hook (8).

7. Vehicle according to Claim 6, **characterized in that** the rod is a pin (15) inserted by force into the bores (16, 17) of the hook (8) and of the case.

8. Vehicle according to Claim 6, **characterized in that** the rod belongs to a quick-attach pin.

9. Motor vehicle according to any one of the preceding claims, **characterized in that** it comprises sensitive equipment (18) arranged in front of the silencer (5).

10. Motor vehicle according to claim 9, **characterized in that** the sensitive equipment (18) is a battery module or a fluid tank or a fuel tank.
